# EUROPEAN PATENT SPECIFICATION

(11) **EP 3 177 861 B1**
(45) Date of publication and mention of the grant of the patent: **20.11.2019**
(21) Application number: 15785198.1
(22) Date of filing: 10.08.2015
(51) Int. Cl.: F16L 27/08, F16C 33/60, F16C 33/58

(54) **SWIVEL DEVICE**
DREHVORRICHTUNG
DISPOSITIF DE PIVOT

(30) Priority: 08.08.2014 WO PCT/NL2014/000022
(43) Date of publication of application: 14.06.2017
(73) Proprietor: J de Jonge Beheer B.V., 3134 KG Vlaardingen (NL)
(72) Inventor: DE JONGE, Jan, NL-3233 SG Oostvoorne (NL)
(74) Representative: van Dokkum, Willem Gerard Theodoor
(86) International application number: PCT/NL2015/000023
(87) International publication number: WO 2016/022023

(56) References cited:
- EP-A2- 2 325 509
- DE-U1- 29 813 025
- US-A- 1 821 873
- US-A1- 2012 187 675

## Description

The invention refers to a swivel device, arranged for providing a swiveling passage to flowing bulk cargo (gaseous, liquid or granular material) from a first fluid pipe to a second fluid pipe via a fluid channel extending through a female swivel member and a male swivel member, the male swivel member extending inside the female swivel member and the swivel members being mutually swiveling borne by a rolling-element bearing configuration.

Such swivel devices are generally known in the area of loading and unloading bulk cargo material like grain and other granulates, powder, oil, chemicals, gas etc. e.g. from and to ships, trucks, storage silos etc.

In such swivel device the female swivel member may comprise a first pipe connection member, arranged to be welded to said first fluid pipe, and the male swivel member may comprise a second pipe connection member, arranged to be welded to said second fluid pipe.

The rolling-element bearing configuration, providing a swiveling interconnection between both pipe connection members, may comprise an female (outer) rolling-element bearing member, arranged to receive (and guide), at its inside, a number of rolling elements including balls and rollers, as well as an male (inner) rolling-element bearing member, arranged to receive (and guide), at its outside, those rolling elements.

In practice the ("heavy duty") rolling-element bearing configuration is susceptible to wear. Due to that both rolling-element bearing members should, preferably, be made of a hard, wear resistant steel type, e.g. a hard alloy steel having a Rockwell C scale hardness of greater than 45, suitable to bear and guide said rolling elements in a wear resistant way. Both pipe connection members, however, must be made of a steel type which is able to be welded to the relevant fluid pipes.

Known swivel devices are complicated comprising too many parts, these devices cannot be disassembled easily on site and parts cannot be repaired and replaced quickly and/or soft weldable steel is used.

US 3,336,057 uses a resilient inner race and an outer race (guideways) having a small thickness which provides for an unstable rolling-element bearing configuration which is susceptible to heavy wear and a short service life.

GB 2029917 also uses inner and outer races requiring additional annular members and rings to form the rolling-element bearing configuration.

DE 2012882 uses rings and annular parts of material with identical properties, which are welded together.

FR 1.522.050 discloses a complicated swivel comprising three bolt and screw connections between a plurality of annular parts and rings. The balls are contained in an annular member without applying a male rolling-element bearing annular member being supported within the second pipe connection member.

US 1,821,873 discloses bearings for a crank comprising an inner raceway (semi-) sleeve and an outer raceway (semi-)sleeve not suitable for a swivel device.

DE 298 13 025 discloses a swivel configuration without a male rolling-element bearing annular member being supported within the second pipe connection member.

The present invention aims to provide a solution for the problem that, due to the fact that wear resistant steel types have bad welding properties, the pipe connection members cannot, in the manufacture of the swivel device, be connected to the swiveling rolling-element bearing configuration by means of welding. Furthermore it is an object of the invention to provide a swivel device witch contains fewer parts, which can be assembled en disassembled easily for service and repair and which reduces wear of the rolling-element bearing configuration by providing a stable and rigid rolling-element bearing configuration.

These objects are achieved according to the invention by providing a swivel device arranged for providing a swiveling passage to a fluid from a first fluid pipe to a second fluid pipe via a fluid channel extending through a female swivel member and a male swivel member, the male swivel member extending inside the female swivel member and the swivel members being mutually swiveling borne by a rolling-element bearing configuration;
where said female swivel member comprises a first pipe connection flange member, arranged to be welded to said first fluid pipe, as well as an female annular one-piece member being part of said rolling-element bearing configuration, wherein the outer face of the female annular one-piece member forms the outer boundary of the female swivel member, wherein a side face of the female annular one-piece member is provided with internal thread holes for receiving the screws from the flange member, and wherein the inner face of the female annular one-piece member is provided with an annular groove for receiving the rolling elements;
wherein said male swivel member comprises a second pipe connection member, arranged to be welded to said second fluid pipe, wherein the second pipe connection member supports an male rolling-element bearing annular member being part of said rolling-element bearing configuration, wherein the male rolling-element bearing annular member is arranged to receive, at its outside, said rolling elements;
wherein the female annular one-piece member and the male rolling-element bearing annular member of the rolling-element bearing configuration are made of a hard, wear resistant steel type having a Rockwell C scale hardness of greater then 45, and wherein said first pipe connection flange member and said female annular one-piece member are interconnected by screw joints and wherein the male rolling-element bearing annular member (11) is fittingly received in an annular recess (14) at the outside of the second pipe connection member (10) and the second pipe connection member encloses the male rolling-element bearing annular member at three sides: around its axial side faces and its inside face.

Preferably, the female annular one-piece member of the rolling-element bearing configuration, made of said hard, wear resistant steel type, is mounted to the first pipe connection member by means of a bolted flange connection forming screw joints, functioning as a preferred force-fit type embodiment of the first interconnection means.

Preferably, the male rolling-element bearing annular member of the rolling-element bearing configuration comprises at least one set of two semi-annular rolling-element bearing shells made of said hard, wear resistant steel type having a Rockwell C scale hardness of greater than 45. Preferably the thickness of the steel is greater than 1 mm and is in particular chosen 3 mm for obtaining a rigid rolling-element bearing configuration with less wear and a longer service life.

Each set of rolling-element bearing shells is mounted around (and preferably within an annular recess of) the second pipe connection member. This configuration with two semi-annular shells mounted around (and within) the second pipe connection member functions as a preferred form-fit type embodiment of the second interconnection means.

Preferably, in this form-fit embodiment of the second connection member, each set of said rolling-element bearing shells is received in an annular recess, provided at the outside of the second pipe connection member. As a result the second pipe connection member encloses the male rolling-element bearing annular member around at its (axial) side faces and inside face, so that a more stable rolling-element bearing configuration is obtained.

In particular, each male rolling-element bearing annular member (including the divided configuration comprising the aforementioned shells) comprises one or more parallel rolling element guideways (races) at its outside, in which the rolling elements are received during the use of the swivel device.

In a special embodiment the male rolling-element bearing annular member comprises at least two parallel rolling element guideways at its outside, and wherein the male rolling-element bearing annular member, at the inside facing the second pipe connection member, is provided with an annular fitted groove located between the two rolling element guideways.

Preferably, the outer face of the second pipe connection member is provided with an annular fitted ridge adapted for fittingly receiving the annular fitted groove of the male rolling-element bearing annular member.

The male rolling-element bearing annular member is (form) fittingly received in the annular recess at the outside of the second pipe connection member, the annular ridge is preferably provided on the outer face of this annular recess. By applying this rolling-element bearing configuration according to the invention, peak tension in the ball guideways and wear of the rolling-element bearing configuration is greatly reduced owing to the stabilizing measures including: guideways provided within one rigid male rolling-element bearing annular member of thick hard steel; providing stabilizing support of the male rolling-element bearing annular member by enclosing within the second pipe connection member; and providing a fitting ridge - groove support of the male rolling-element bearing annular member by the second pipe connection member, essentially in de centre portion of the male rolling-element bearing annular member, between the two guideways.

By dividing the male rolling-element bearing annular member into at least two half semi-annular shells, allows for providing the male rolling-element bearing annular shell with an increased material thickness >1 mm and preferably about 3 mm thick, so that an rigid shell is obtained, thereby stabilizing the rolling-element bearing configuration and consequently increasing the service life of the swivel during use by reducing brinelling of the guideways.

In order to provide a fluid-tight seal between both (mutually swiveling) pipe connection members, an annular sealing gasket may be provided between the first pipe connection member and the second pipe connection member. Preferably, the annular sealing gasket comprises a gasket body (e.g. made of a rigid material) comprising a first annular groove provided with a first sealing ring made of a resilient material and a second annular groove provided with a second sealing ring made of a resilient material. Preferably, the first annular groove faces to the end face of the first pipe connection member and the second annular groove faces to the end face of the second pipe connection member. The preferred seal is provided directly between (the end faces of) both pipe connection members, bypassing both rolling-element bearing members, thus providing in a very reliable swiveling seal.

Hereinafter the invention will be elucidated with reference to some figures.

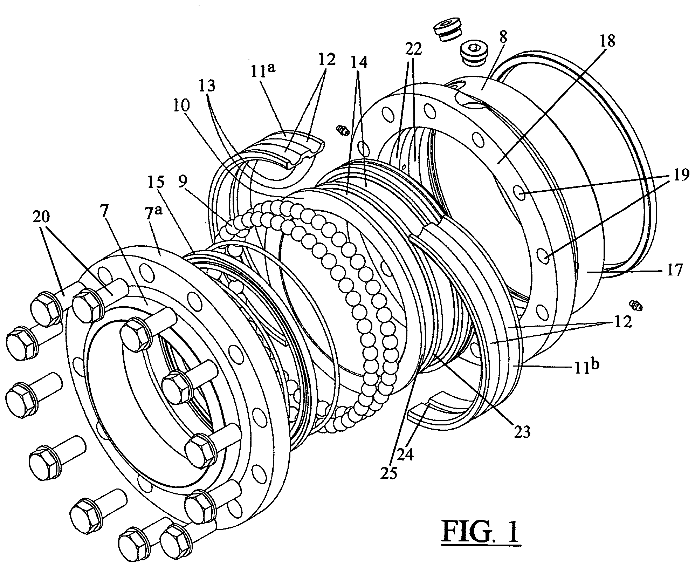

- Figure 1: shows, in exploded view, a preferred embodiment of a swivel device according to the invention;

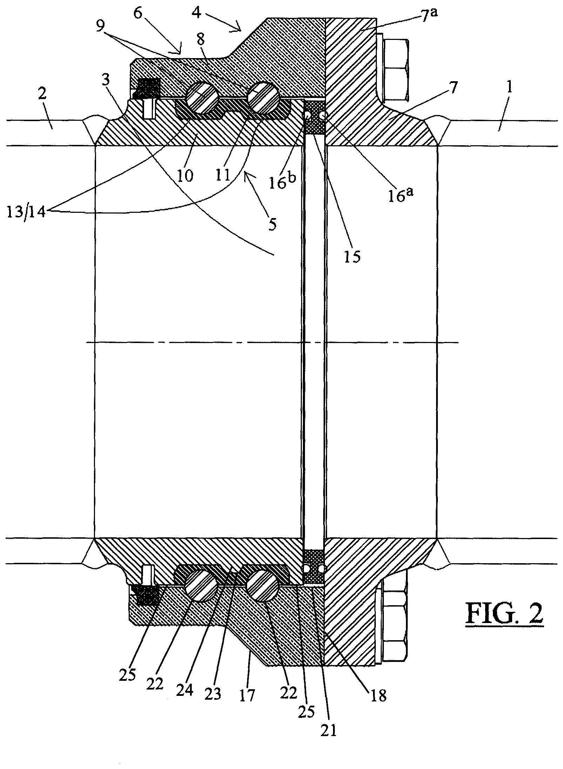

- Figure 2: shows the same embodiment in cross-section.

Both figures show a swivel device arranged for providing a swiveling passage to a fluid from a first fluid pipe 1 to a second fluid pipe 2 via a fluid channel 3 extending through a female swivel member 4 and a male swivel member 5; the male swivel member 5 extending inside the female swivel member 4 and the swivel members being mutually swiveling borne by a rolling-element bearing configuration 6.

The female swivel member 4 comprises a first pipe connection flange member 7, arranged to be welded to the first fluid pipe 1, as well as an female annular one-piece member 8, being part of the rolling-element bearing configuration 6 and arranged to receive, at its inside, a number of rolling elements such as the bearing balls 9 shown.

The male swivel member 5 comprises a second pipe connection member 10, arranged to be welded to the second fluid pipe 2, as well as an male rolling-element bearing member 11, also being part of the rolling-element bearing configuration 6 and arranged to receive, at its outside, the rolling elements 9.

Both the female annular one-piece member 8 and the male rolling-element bearing member 11 are made of a hard, wear resistant steel type, preferably a hard alloy steel having a Rockwell C scale hardness of greater than 45, suitable to bear and guide the rolling elements 9 in a wear resistant way.

The first pipe connection flange member 7 and the female annular one-piece member 8 cannot be interconnected by welding due to the bad welding properties of the female rolling-element bearing member 8, made of a hard (alloy) steel. Hence members 7 and 8 are interconnected by force-fit (non-positive) type interconnection, viz. mounted to each other by means of a bolted flange connection or screw joints with screws 20 through flange 7a into internal thread holes 19 within the female annular one-piece member 8.

Advantageously in this rolling-element bearing configuration 6 according to the invention, the female annular one-piece member 8 combines in one piece the required features of: a wear resistant outer rolling-element bearing member of hard steel; the outer boundary (outer face 17) of the female swivel member 4; and interconnection member comprising internal thread holes 19 for receiving the screws 20 from the first pipe connection flange member 7.

The second pipe connection member 10 and the male rolling-element bearing member 11 are interconnected by form-fit (positive) type interconnection. For that purpose the male rolling-element bearing member 11 of the rolling-element bearing configuration 6 comprises at least one (one in the shown embodiment) set of two semi-annular rolling-element bearing shells 11a and 11b, made of the hard, wear resistant steel type and each comprising one or more (two in the embodiment) parallel rolling element guideways 12 at its outside. Each set of rolling-element bearing shells 11a/b is mounted around the second pipe connection member 10. This configuration with two semi-annular shells 11a/b mounted around the second pipe connection member 10 functions as a form-fit type interconnection. In the form-fit embodiment as shown in the figures the rolling-element bearing shells 11a/b are received, with their inside face 13, in an annular recess 14 within the outside of the second pipe connection member 10. As a result the second pipe connection member (fittingly) encloses the male rolling-element bearing annular member at three sides: around its (axial) side faces and its inside face, so that a more stable rolling-element bearing configuration is obtained, providing less wear and a longer service life of the swivel device.

In a more stable embodiment of the rolling-element bearing configuration 6 the male rolling-element bearing annular member 11 comprises at least two parallel rolling element guideways 12 at its outside, and its inside face 13 facing the second pipe connection member 10 is provided with an annular fitted groove 23 located between the two rolling element guideways 12. The outer face 25 of the second pipe connection member 10 is provided with an annular fitted ridge 24 adapted for fittingly receiving the annular fitted groove 23 of the second pipe connection member 10.

Furthermore the male rolling-element bearing annular member 11 is provided with a thickness of approximately 3 mm, resulting in a rigid, non-resilient member, which enhances stability in the rolling-element bearing configuration 6.

In order to provide a fluid-tight seal between both (mutually swiveling) pipe connection members 7 and 10 respectively, an annular sealing gasket is provided between the first pipe connection flange member 7 and the second pipe connection member 10. The annular sealing gasket comprises an H-shaped gasket body 15 (e.g. made of a rigid material) comprising a first annular groove provided with a first sealing ring 16a made of a resilient material and a second annular groove provided with a second sealing ring 16b made of a resilient material. The first angular groove and sealing ring 16a face to the end face of the first pipe connection flange member 7 and the second annular groove and sealing ring 16b face to the end face of the second pipe connection member 10. The seal configuration 15-16a/b provided between the end faces of the pipe connection members 7 and 10 thus bypasses both rolling-element bearing members 8 and 11, thus providing a very reliable swiveling seal.

## Claims

1. Swivel device arranged for providing a swiveling passage to a fluid from a first fluid pipe (1) to a second fluid pipe (2) via a fluid channel (3) extending through a female swivel member (4) and a male swivel member (5), the male swivel member extending inside the female swivel member and the swivel members being mutually swiveling borne by a rolling-element bearing configuration (6); where said female swivel member comprises a first pipe connection flange member (7), arranged to be welded to said first fluid pipe, as well as an female annular one-piece member (8) being part of said rolling-element bearing configuration, wherein the outer face (17) of the female annular one-piece member (8) forms the outer boundary of the female swivel member (4), wherein a side face (18) of the female annular one-piece member (8) is provided with internal thread holes (19) for receiving screws (20) from the first pipe connection flange member (7), and wherein the inner face (21) of the female annular one-piece member (8) is provided with an annular groove (22) for receiving the rolling elements (9);
wherein said male swivel member (5) comprises a second pipe connection member (10), arranged to be welded to said second fluid pipe (2), wherein the second pipe connection member (10) supports a male rolling-element bearing annular member (11) being part of said rolling-element bearing configuration (6), wherein the male rolling-element bearing annular member (11) is arranged to receive, at its outside, said rolling elements (9);
wherein the female annular one-piece member (8) and the male rolling-element bearing annular member (11) of the rolling-element bearing configuration (6) are made of a hard, wear resistant steel type having a Rockwell C scale hardness of greater then 45, and
wherein said first pipe connection flange member (7) and said female annular one-piece member (8) are interconnected by screw joints,
**characterized, in that** the male rolling-element bearing annular member (11) is fittingly received in an annular recess (14) at the outside of the second pipe connection member (10) and the second pipe connection member (10) encloses the male rolling-element bearing annular member (11) at three sides: around its axial side faces and its inside face.

2. Swivel device according to claim 1, wherein the male rolling-element bearing annular member (11) is configured by at least one set of two semi-annular rolling-element bearing shells (11a/b) made of hard, wear resistant steel type having a Rockwell C scale hardness of greater than 45.

3. Swivel according to claim 1 - 2, wherein the male rolling-element bearing annular member (11) comprises one or more parallel rolling element guideways (12), in which the rolling elements (9) are received.

4. Swivel device according to claim 1 - 3, wherein the male rolling-element bearing annular member (11) comprises at least two parallel rolling element guideways (12) at its outside, and wherein the male rolling-element bearing annular member (11), at the inside (13) facing the second pipe connection member (10), is provided with an annular fitted groove (23) located between the two rolling element guideways (12).

5. Swivel device according to claim 4, wherein the outer face (25) of the second pipe connection member (10) is provided with an annular fitted ridge (24) adapted for fittingly receiving the annular fitted groove (23) of the male rolling-element bearing annular member (11).

6. Swivel device according to claim 2 - 5, wherein the at least one set of rolling-element bearing shells (11a/b) is received in the annular recess (14), provided at the outside of the second pipe connection member (10).

7. Swivel according to any preceding claim, wherein an annular sealing gasket is provided between the first pipe connection member (7) and the second pipe connection member (10).

8. Swivel according to claim 7, wherein the annular sealing gasket comprises a gasket body (15) comprising a first annular groove provided with a first sealing ring (16a) made of a resilient material and a second annular groove provided with a second sealing ring (16b) made of a resilient material.

9. Swivel according to claim 8, wherein the first annular groove faces to the end face of the first pipe connection member and the second angular groove faces to the end face of the second pipe connection member.

## Patentansprüche

1. Drehvorrichtung, die zum Vorsehen eines Drehdurchgangs zu einem Fluid von einem ersten Fluidrohr (1) zu einem zweiten Fluidrohr (2) über einen Fluidkanal (3) angeordnet ist, welcher durch ein weibliches Drehglied (4) und ein männliches Drehglied (5) verläuft, wobei das männliche Drehglied innerhalb des weiblichen Drehglieds verläuft und die Drehglieder wechselseitig durch eine Wälzlagerkonfiguration (6) drehbar gelagert sind;
wobei das weibliche Drehglied ein erstes Rohrverbindungsflanschglied (7), das dazu angeordnet ist, an das erste Fluidrohr geschweißt zu werden, sowie ein weibliches ringförmiges einstückiges Glied (8) aufweist, das ein Teil der Wälzlagerkonfiguration ist, wobei die Außenseitenfläche (17) des weiblichen ringförmigen einstückigen Glieds (8) die äußere Begrenzung des weiblichen Drehglieds (4) ausbildet, wobei eine Seitenfläche (18) des weiblichen ringförmigen einstückigen Glieds (8) mit Innengewindelöchern (19) zum Aufnehmen von Schrauben (20) vom ersten Rohrverbindungsflanschglied (7) versehen ist, und wobei die innere Fläche (21) des weiblichen ringförmigen einstückigen Glieds (8) mit einer ringförmigen Nut (22) zum Aufnehmen der Rollelemente (9) versehen ist;
wobei das männliche Drehglied (5) ein zweites Rohrverbindungsglied (10) aufweist, das dazu angeordnet ist, an das zweite Fluidrohr (2) geschweißt zu werden, wobei das zweite Rohrverbindungsglied (10) ein männliches ringförmiges Wälzlagerelement (11) stützt, das ein Teil der Wälzlagerkonfiguration (6) ist, wobei das männliche ringförmige Wälzlagerelement (11) dazu angeordnet ist, auf seiner Außenseite, die Rollelemente (9) aufnehmen;
wobei das weibliche ringförmige einstückige Glied (8) und das männliche ringförmige Wälzlagerelement (11) der Wälzlagerkonfiguration (6) aus einer harten, verschleißfesten Stahlart mit Rockwell-C-Skalahärte von über 45 hergestellt sind, und
wobei das erste Rohrverbindungsflanschglied (7) und das weibliche ringförmige einstückige Glied (8) durch Verschraubungen miteinander verbunden sind,
**dadurch gekennzeichnet, dass** das männliche ringförmige Wälzlagerelement (11) passend in einer ringförmigen Aussparung (14) auf der Außenseite des zweiten Rohrverbindungsglieds (10) aufgenommen ist und das zweite Rohrverbindungsglied (10) das männliche ringförmige Wälzlagerelement (11) auf drei Seiten einschließt: um seine axialen Seitenflächen und seine Innenseitenfläche.

2. Drehvorrichtung nach Anspruch 1, wobei das männliche ringförmige Wälzlagerelement (11) durch zumindest einen Satz von zwei halbringförmigen Wälzlagerschalen (11a/b) konfiguriert ist, die aus einer harten, verschleißfesten Stahlart mit einer Rockwell-C-Skalahärte von über 45 hergestellt sind.

3. Drehvorrichtung nach Anspruch 1 bis 2, wobei das männliche ringförmige Wälzlagerelement (11) eine oder mehr parallele Rollelementführungsbahnen (12) umfasst, in denen die Rollelemente (9) aufgenommen sind.

4. Drehvorrichtung nach Anspruch 1 bis 3, wobei das männliche ringförmige Wälzlagerelement (11) zumindest zwei parallele Rollelementführungsbahnen (12) auf seiner Außenseite umfasst, und wobei das männliche ringförmige Wälzlagerelement (11) auf der Innenseite (13), die dem zweiten Rohrverbindungsglied (10) zugekehrt ist, mit einer ringförmigen eingepassten Nut (23) versehen ist, die sich zwischen den zwei Rollelementführungsbahnen (12) befindet.

5. Drehvorrichtung nach Anspruch 4, wobei die äußere Seitenfläche (25) des zweiten Rohrverbindungsglieds (10) mit einem ringförmigen eingepassten Grat (24) versehen ist, der zum passenden Aufnehmen der ringförmigen eingepassten Nut (23) des männlichen ringförmigen Rollelementlagerglieds (11) geeignet ist.

6. Drehvorrichtung nach Anspruch 2 bis 5, wobei der zumindest eine Satz von Wälzlagerschalen (11a/b) in der ringförmigen Aussparung (14) aufgenommen ist, die auf der Außenseite des zweiten Rohrverbindungsglieds (10) vorgesehen ist.

7. Drehvorrichtung nach einem der vorhergehenden Ansprüche, wobei eine ringförmige Dichtung zwischen dem ersten Rohrverbindungsglied (7) und dem zweiten Rohrverbindungsglied (10) vorgesehen ist.

8. Drehvorrichtung nach Anspruch 7, wobei die ringförmige Dichtung einen Dichtungskörper (15) aufweist, der eine erste ringförmige Nut, welche mit einem ersten Dichtungsring (16a) aus einem elastischen Material versehen ist, und eine zweite ringförmige Nut umfasst, welche mit einem zweiten Dichtungsring (16b) aus einem elastischen Material versehen ist.

9. Drehvorrichtung nach Anspruch 8, wobei die erste ringförmige Nut der Endseitenfläche des ersten Rohrverbindungsglieds zugekehrt ist und die zweite ringförmige Nut der Endseitenfläche des zweiten Rohrverbindungsglieds zugekehrt ist.

## Revendications

1. Dispositif de pivot agencé pour fournir un passage pivotant à un fluide d'un premier tuyau de fluide (1) à un deuxième tuyau de fluide (2) via un canal de fluide (3) s'étendant à travers un élément de pivot femelle (4) et un élément de pivot mâle (5), l'élément de pivot mâle s'étendant dans l'élément de pivot femelle et les éléments de pivot étant mutuellement pivotants portés par une configuration de palier à éléments roulants (6) ;
où ledit élément de pivot femelle comprend un premier élément de bride de raccord de tuyau (7), agencé pour être soudé audit premier tuyau de fluide, ainsi qu'un élément d'une seule pièce annulaire femelle (8) faisant partie de ladite configuration de palier à éléments roulants, où la face extérieure (17) de l'élément d'une seule pièce annulaire femelle (8) forme la limite extérieure de l'élément de pivot femelle (4), où une face latérale (18) de l'élément d'une seule pièce annulaire femelle (8) est munie de trous filetés intérieurs (19) pour recevoir des vis (20) du premier élément de bride de raccord de tuyau (7), et où la face intérieure (21) de l'élément d'une seule pièce annulaire femelle (8) présente une rainure annulaire (22) pour recevoir les éléments roulants (9) ;
dans lequel ledit élément de pivot mâle (5) comprend un deuxième élément de raccord de tuyau (10), agencé pour être soudé audit deuxième tuyau de fluide (2), dans lequel le deuxième élément de raccord de tuyau (10) supporte un élément annulaire à palier à éléments roulants mâle (11) faisant partie de ladite configuration de palier à éléments roulant (6), où l'élément annulaire à palier à élément roulant (11) est agencé pour recevoir, à son extérieur, lesdits éléments roulants (9) ;
où l'élément d'une seule pièce annulaire femelle (8) et l'élément annulaire à palier à éléments roulants mâle (11) de la configuration de palier à éléments (6) sont constitués d'un type d'acier dur et résistant à l'usure ayant une dureté d'échelle Rockwell C supérieure à 45, et
où ledit premier élément de bride de raccord de tuyau (7) et ledit élément d'une seule pièce annulaire femelle (8) sont interconnectés par des raccords à vis,
**caractérisé en ce que** l'élément annulaire à palier à éléments roulants mâle (11) est logé de manière ajustée dans un évidement annulaire (14) à l'extérieur du deuxième élément de raccord de tuyau (10) et le deuxième élément de raccord de tuyau (10) entoure l'élément annulaire à palier à éléments roulants mâle (11) sur trois côtés : autour de ses faces latérales axiales et sa face intérieure.

2. Dispositif de pivot selon la revendication 1, dans lequel l'élément annulaire à palier à éléments roulants mâle (11) est constitué d'au moins un ensemble de deux coquilles de palier à éléments roulants semi-annulaires (11a/b) en acier dur, résistant à l'usure, ayant une dureté Rockwell C supérieure à 45.

3. Dispositif de pivot selon la revendication 1 à 2, dans lequel l'élément annulaire à palier à éléments roulants mâle (11) comporte un ou plusieurs chemins de guidage parallèles d'éléments roulants (12), dans lesquels les éléments roulants (9) sont reçus.

4. Dispositif de pivot selon les revendications 1 à 3, dans lequel l'élément annulaire à palier à éléments roulants mâle (11) comprend au moins deux chemins de guidage d'éléments roulants parallèles (12) au niveau de leur extérieur, et où dans lequel l'élément annulaire à palier à éléments roulants mâle (11), au niveau de l'intérieur (13) tourné vers le deuxième élément de raccord de tuyau (10), est pourvu d'une rainure annulaire ajustée (23) située entre les deux chemins de guidage d'éléments roulants (12).

5. Dispositif de pivot selon la revendication 4, dans lequel la face extérieure (25) du deuxième élément de raccord de tuyau (10) est munie d'une nervure annulaire ajustée (24) configurée pour recevoir de manière ajustée la rainure annulaire ajustée (23) de l'élément annulaire à palier à éléments roulants mâle (11).

6. Dispositif de pivot selon les revendications 2 à 5, dans lequel ledit au moins un ensemble de deux coquilles de palier à éléments roulants semi-annulaires (11a/b) est reçu dans l'évidement annulaire (14) prévu à l'extérieur du deuxième élément de raccord de tuyau (10).

7. Pivotement selon l'une quelconque des revendications précédentes, dans lequel un joint d'étanchéité annulaire est prévu entre le premier élément de raccord de tuyau (7) et le deuxième élément de raccord de tuyau (10).

8. Pivotement selon la revendication 7, dans lequel le joint d'étanchéité annulaire comprend un corps de joint (15) comprenant une première gorge annulaire munie d'une première bague d'étanchéité (16a) faite d'un matériau élastique et une deuxième gorge annulaire munie d'une deuxième bague d'étanchéité (16b) faite d'un matériau élastique.

9. Pivotement selon la revendication 8, dans lequel la première rainure annulaire étant tournée vers la face d'extrémité du premier élément de raccord de tuyau et la deuxième rainure angulaire vers la face d'extrémité du deuxième élément de raccord de tuyau.
